## Europäisches Patentamt
## European Patent Office
## Office européen des brevets

(19)

(11) Veröffentlichungsnummer: **0 012 410**
**B1**

(12) **EUROPÄISCHE PATENTSCHRIFT**

(45) Veröffentlichungstag der Patentschrift: **15.12.82**

(21) Anmeldenummer: **79105036.2**

(22) Anmeldetag: **10.12.79**

(51) Int. Cl.³: **B 01 J 19/00, B 01 J 3/04, C 08 F 2/16 //F28D1/06**

(54) **Vorrichtung zur Zuführung der Aufheizenergie oder zur Abführung der Reaktionswärme bei der Polymerisation von Monomeren.**

(30) Priorität: **16.12.78 DE 2854450**

(43) Veröffentlichungstag der Anmeldung:
**25.06.80 Patentblatt 80/13**

(45) Bekanntmachung des Hinweises auf die Patenterteilung:
**15.12.82 Patentblatt 82/50**

(84) Benannte Vertragsstaaten:
**AT BE CH DE FR GB IT LU NL SE**

(56) Entgegenhaltungen:
**DE - A - 1 601 158
DE - A - 1 910 824
DE - A - 2 005 145
DE - A - 2 032 700
DE - B - 1 032 229
DE - C - 709 968
GB - A - 1 453 614
US - A - 2 545 371
US - A - 4 107 410**

(73) Patentinhaber: **HOECHST AKTIENGESELLSCHAFT
Postfach 80 03 20
D-6230 Frankfurt/Main 80 (DE)**

(72) Erfinder: **Komischke, Peter
Klosterstrasse 39
D-5030 Efferen (DE)**
Erfinder: **Wissel, Kurt, Dr.
Kreuzknippchen 80
D-5301 Urfeld (DE)**
Erfinder: **Prell, Lorenz
Dr. Kraus-Strasse 9
D-5030 Knapsack (DE)**

Courier Press, Leamington Spa, England.

## Vorrichtung zur Zuführung der Aufheizenergie oder zur Abführung der Reaktionswärme bei der Polymerisation von Monomeren

Die Erfindung betrifft eine Vorrichtung zur Zuführung der Aufheizenergie oder zur Abführung der Reaktionswärme bei der Polymerisation von Monomeren, insbesondere bei der Suspensionspolymerisation von Vinylchlorid, die aus einem mit Stromstörblechen versehenen zylindrischen Behälter besteht, in welchem sich mindestens ein mehrflügeliges Rührwerk befindet und auf dessen Innenwand eine Wärmetauschkonstruktion in Form einer peripheral verlaufenden Halbrohrschlange angeordnet ist.

Es ist bekannt, zur Wärmezu- und -abfuhr und gegebenenfalls gleichzeitigen Durchmischung chemisch miteinander reagierender Flüssigkeiten oder Feststoffpartikel temperierte Kessel zu verwenden, wobei diese Kessel insbesondere bei Krustenbildung bequeme Reinigungsmöglichkeiten beiten. Die Kessel können durch einen außen angebrachten Mantel gekühlt oder beheizt werden, wobei der Wärmeübergang um ein Mehrfaches verbessert werden kann, wenn der Kessel mit einem Rührwerk versehen ist. Dabei kann der Kessel als Mantel beispielsweise aufgeschweißte Halbrohrschlangen oder Winkelprofile aufweisen ("Ullmanns Encyklopädie der technischen Chemie", 4, Auflage, Band 2, 1972, Seiten 439 und 440).

Zur Durchführung von Polymerisationen, beispielsweise Suspensions- oder Massepolymerisationen, in Großansätzen werden Autoklaven verwendet, wobei die Temperatur im Autoklav durch Abfuhr der Polymerisationswärme konstant auf einem optimalen Wert gehalten wird. Die Wärmeabfuhr erfolgt dabei durch die Wand des Autoklaven, welcher einen von einem Kühlmedium durchströmten Doppelmantel aufweist (DE—B—2 038 363; DE—C—2 032 700).

Aus der DE—B—1 032 229 ist ein mit Rührer versehener zylindrischer Behälter bekannt, auf dessen Innenwandung Kohle- und Gummiplatten aufgekittet sind. Auf den Gummiplatten sind in peripheraler Anordnung Halbschalen aus Kunstkohle oder Graphit befestigt, die durch Anbringung von Zwischenstücken Abstand voneinander aufweisen. Dabei sind die Halbschalen so verlegt, daß sie ein zusammenhängendes Rohrsystem für Heiz- oder Kühlflüssigkeiten bilden.

An der Innenwandung des zur Durchführung von chemischen Prozessen geeigneten, mit einem Rührer versehenen Behälters nach der GB—A—1 453 614 sind axial verlaufende Hohlrippen befestigt. Die Hohlrippen münden mit ihrem oberen und unteren Ende jeweils in eine kreisringförmige Kammer ein, über welche sie mit einem Heiz- oder Kühlmedium beaufschlagbar sind.

Schließlich ist, aus der DE—A—1 601 158 ein mit einem Rührwerk versehbarer, heiz- oder kühlbarer Behälter bekannt, dessen Wandungen aus schraubengangförmig gewundenen Rohren bestehen, welche eng aneinander liegen und dichtschließend miteinander verbunden sind. Dabei sind die Rohre mit einem strömenden Heiz- oder Kühlmittel beaufschlagbar und können runden oder eckigen Querschnitt aufweisen.

Nachteilig ist bei einem Behälter, auf dessen Innenwand peripheral angeordnete Halbschalen mit Abstand voneinander befestigt sind, daß dadurch die Wärmeaustauschfläche verglichen mit der einer glatten Wand eines doppelwandigen Behälters praktisch nicht vergrößert wird. Bei der Verwendung eines Behälters, dessen Wandungen aus schraubengangförmig gewundenen Rohren bestehen, als Druckbehälter ist von Nachteil, daß durch die erforderliche Erhöhung der Wandstärke der Rohre der Wärmeübergang erheblich verschlechtert wird.

Es ist daher Aufgabe der vorliegenden Erfindung, eine Vorrichtung zur Zuführung der Aufheizenergie oder zur Abführung der Reaktionswärme bei der Polymerisation von Monomeren, welche einen zylindrischen Behälter mit einer an seiner Innenwandung angeordneten, peripheral verlaufenden Halbrohrschlange als Wärmeaustauschkonstruktion umfaßt, anzugeben, bei welcher die dem Behälterinhalt zugewandte temperierte Fläche vergrößert ist. Das wird erfindungsgemäß dadurch erreicht, daß die Halbrohrschlange im zylindrischen Bereich des Behälters von Halbrohr zu Halbrohr abstandsfrei gewickelt ist und die Halbrohre als halbe Kreisrohre vorliegen.

Dabei kann die Halbrohrschlange auf die Innenwand des Behälters aufgeschweißt sein.

Bei der Vorrichtung gemäß der Erfindung ist die Wärmeaustauschfläche bis zu 57% größer als bei einer glatten Behälterwand. Darüberhinaus werden dabei der Wärmetransport durch die Wand durch die auftretenden günstigen Strömungsverhältnisse gefördert und gleichzeitig eventuelle Feststoffanbackungen an der Wand unterdrückt.

Bei der erfindungsgemäßen Vorrichtung kann die Wandstärke der Halbrohrschlange auch bei hohen Drucken innerhalb des Behälters klein und damit der Wärmedurchgangswiderstand niedrig gehalten werden, wenn der Druck des Heiz- oder Kühlmediums in dem Raum zwischen der Wand des Behälters und der darauf angeordneten Halbrohrschlange stetig dem Druck innerhalb des Behälters angepaßt wird.

Bei der Vorrichtung gemäß der Erfindung kann die Wandstärke der Halbrohrschlange kleiner gewählt werden, da die Wand des Behälters für mechanische Stabilisierung sorgt. Dadurch wird der Wärmedurchgang deutlich verbessert. In diesem Zusammenhang sei darauf hingewiesen, daß Behälter, welche einem Druck von beispielsweise 17 bar standhalten sollen, mit steigendem Volumen eine größere Wandstärke (25 m³:17 mm; 100 m³:25 mm; 200 m³:38 mm) aufweisen müssen, während die Halbrohrschlange bei der erfindungsgemäßen Vorrichtung in allen Fällen nur eine Wandstärke von etwa 3 mm haben muß. In der beigefügten graphischen Darstellung ist die übertragbare Wärmeleistung für Behälter verschiedener Größe wiedergegeben; und zwar gilt Kurve 1 für Behälter nach dem Stand der Technik und Kurve 2 für die erfindungsgemäße Vorrichtung.

Durch die Vorrichtung gemäß der Erfindung wird bei der Polymerisation von Monomeren die Aufheizzeit bei gleicher Temperatur des Heizmediums verkürzt bzw. erfolgt die Aufheizung in gleicher Zeit bei niedrigerer Temperatur des Heizmediums. Dadurch wird insbesondere bei der diskontinuierlichen Durchführung des Suspensions-Polymerisations-prozesses zur Herstellung von Polyvinylchlorid die Anbackung von Polymerisat an der Wand verringert und damit die Qualität des Produktes verbessert (Verringerung der Zahl der sog. Stippen).

In der beigefügten Zeichnung ist die erfindungsgemäße Vorrichtung schematisch und teilweise im Schnitt dargestellt.

Im zylindrischen Behälter 1 sind mehrere Stromstörbleche 3 angebracht. Im unteren Bereich des Behälters 1 befindet sich ein mehrflügeliges Rührwerk 2, dessen Welle den Boden des Behälters 1 durchdringt. Im vertikalen Bereich des Behälters 1 ist als Wärmetauschkonstruktion eine abstandsfrei gewickelte Halbrohrschlange 4 aufgeschweißt, durch welche mit Hilfe eines Eintrittsstutzens 5 und eines Austrittsstutzens 6 Heiz- bzw. Kühlmedium hindurchleitbar ist.

Die bei Andwendung der Vorrichtung gemäß der Erfindung erreichbaren Vorteile werden anhand der folgenden Beispiele aufgezeigt.

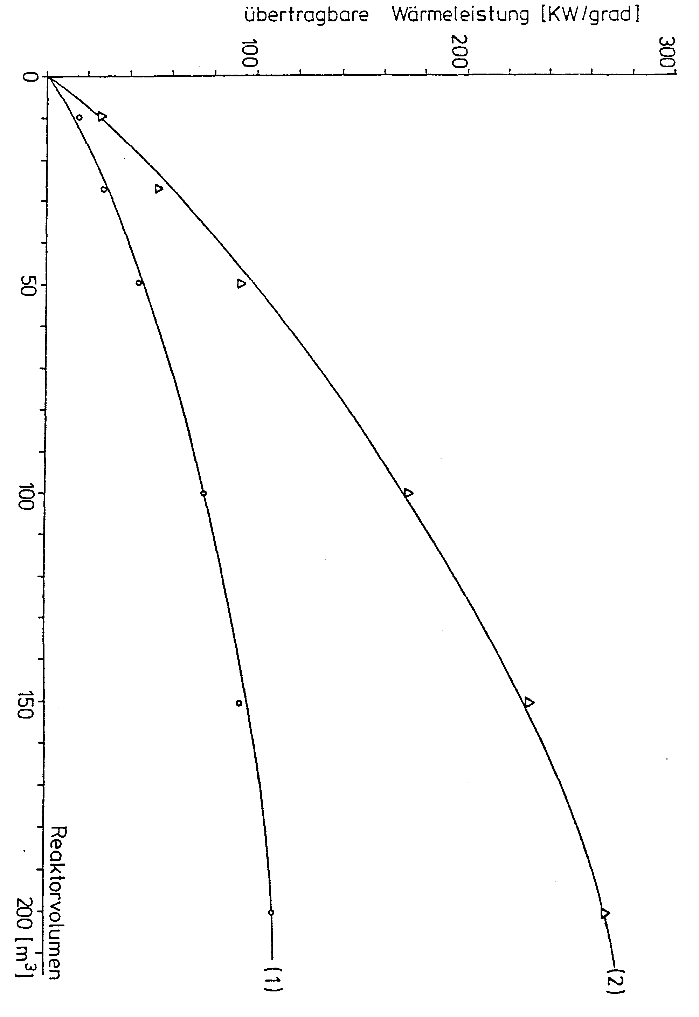

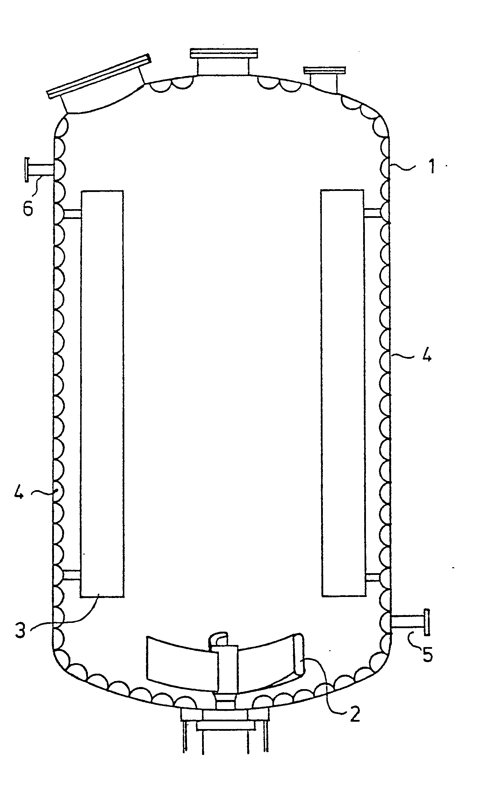

Beispiel 1 (Stand der Technik)
Ein für einen Druck von 17 bar ausgelegter, stehend angeordneter, 25 m³ fassender, mit einem Rührwerk versehender, zylindrischer Behälter, auf dessen Außenwand eine Halbrohrschlange aufgeschweißt ist (vergl. "Ullmanns Encyklopädie der technischen Chemie", 4. Auflage, Band 2, Seite 439, Abb. 16 D), wurde mit 24 m³ Wasser von 20°C gefüllt. Nach Einschalten des Rührers wurde durch die Halbrohrschlange Heißwasser (95°C) hindurchgeleitet und die Aufheizzeit, bis das im Behälter befindliche Wasser eine Temperatur von 55°C aufwies, zu 36 Minuten ermittelt. Die pro Zeiteinheit zugeführte Wärmemenge betrug $1,63 \times 10^3$ kW.

Beispiel 2 (Stand der Technik)
In den im Beispiel 1 verwendeten Behälter wurden 24 m³ Wasser von 55°C vorgelegt. Nach Einschalten des Rührers wurde Wasser von 20°C durch die Halbrohrschlange geführt und stündlich 1400 kg Sattdampf (120°C) in den Behälter eingeleitet, wodurch das im Behälter befindliche Wasser konstant auf 55°C gehalten wurde. Die pro Zeiteinheit abgeführte Wärmemenge betrug $0,962 \times 10^3$ kW.

Beispiel 3 (erfindungsgemäß)
Ein für einen Druck von 17 bar ausgelegter, stehend angeordneter, 25 m³ fassender, mit einem Rührwerk versehener, zylindrischer Behälter, auf dessen Innenwand eine Halbrohrschlange von 3 mm Wandstärke aufgeschweißt ist, wurde mit 24 m³ Wasser von 20°C gefüllt. Nach Einschalten des Rührers wurde durch die Halbrohrschlange Heißwasser (95°C) hindurchgeleitet und die Aufheizzeit, bis das im Behälter befindliche Wasser eine Temperatur von 55°C aufwies, zu 20 Minuten ermittelt. Die pro Zeiteinheit zugeführte Wärmemenge betrug $2,97 \times 10^3$ kW; d. h. 182% der Wärmemenge, welche nach dem Stand der Technik (vergl. Beispiel 1) zuführbar ist.

Beispiel 4 (erfindungsgemäß)
In den im Beispiel 3 verwendeten Behälter wurden 24 m³ Wasser von 55°C vorgelegt. Nach Einschalten des Rührers wurden Wasser von 20°C durch die Halbrohrschlange geführt und stündlich 2480 kg Sattdampf (120°C) in den Behälter eingeleitet, wodurch das im Behälter befindliche Wasser konstant auf 55°C gehalten wurde. Die pro Zeiteinheit abgeführte Wärmemenge betrug $1,70 \times 10^3$ kW; d. h. 177% der Wärmemenge, welche nach dem Stand der Technik (vergl. Beispiel 2) abführbar ist.

Beispiel 5 (Stand der Technik)
In den im Beispiel 1 verwendeten Behälter wurden nach Einschalten des Rührers folgende Substanzen eingefüllt:

13800 kg entmineralisiertes Wasser
3,1 kg teilverseiftes Polyvinylacetat
2,6 kg Hydroxypropylmethylcellulose
15 kg Sorbitanmonolaurat

Nach Verdrängen der Luft durch Evakuieren wurden 8300 kg Vinylchlorid und 5 kg Bis - (2 - äthylhexyl)peroxidcarbonat (65% ig) zugegeben. Durch Durchleiten von Heißwasser (95°C) durch die Halbrohrschlange wurde der Behälterinhalt in 29 Minuten auf 55°C, die Reaktionstemperatur, erwärmt. Nach Erreichen der Reaktionstemperatur wurde Wasser von 20°C so durch die Halbrohrschlange geführt, daß diese Temperatur konstant gehalten wurde.

Nach beendeter Polymerisation wurde der Behälter entspannt, die Suspension durch Strippen mit Wasserdampf vom restlichen Vinylchlorid befreit und das Polyvinylchlorid aus der Suspension abgeschleudert. Es wurden je Stunde 995 kg Polyvinylchlorid erzeugt.

Zur Qualitätsbeurteilung des erzeugten Polyvinylchlorids wurden durchgeführt:

a) Bestimmung des K-Wertes (nach DIN 53 726, Ausgabe Juni 1961): 70
b) Bestimmung des Schüttgewichtes: 470 g/cm³
c) Ausführung des sog. Stippentestes. Hierzu wurde ein Walzfell von 0,2 mm Stärke hergestellt, wozu das Produkt 15 min bei 140°C gewalzt wurde. Durch Auszählen von je 100 cm² Folie wurde als Mittel aus 5 Auszählungen die Zahl der Stippen zu 12 ermittelt.

Der Behälter wurde schließlich mit Hochdruckwasser von 250 bar gereinigt. Das Reinigungswasser wurde filtriert und ca. 0,5 kg Feststoffanteile ermittelt, welche von den Wandverkrustungen des Behälters herrühran.

Beispiel 6 (erfindungsgemäß)
In den im Beispiel 3 verwendeten Behälter wurden die im Beispiel 5 genannten vier Substanzen unter Rühren eingeführt. Nach Verdrängen der Luft durch Evakuieren wurden 8300 kg Vinylchlorid und 6,1 kg Bis - (2 - äthylhexyl)peroxidicarbonat (65% ig) zugegeben. Durch Durchleiten von Heißwasser (95°C) durch die Halbrohrschlange wurde der Behälterinhalt in 14 Minuten auf 55°C, die Reaktionstemperatur, erwärmt. Nach Erreichen der Reaktionstemperatur wurde Wasser von 20°C so durch die Halbrohrschlange geführt, daß diese Temperatur konstant gehalten wurde.

Nach beendeter Polymerisation wurde, wie in Beispiel 5 angegeben, weiterverfahren. Dabei wurden je Stunde 1250 kg Polyvinylchlorid, d. h. 126% in Bezug auf den Stand der Technik (vergl. Beispiel 5), erzeugt. Im Reinigungswasser wurden 0,2 kg Feststoffanteile ermittelt, welche von den Wandverkrustugen des Behälters herrühren.

Zur Qualitätsbeurteilung des erzeugten Polyvinylchlorids wurden die Tests wie in Beispiel 5 durchgeführt:

a) K-Wert: 70
b) Schüttgewicht: 475 g/cm³
c) 5 Stippen je 100 cm² Folie

## Patentansprüche

1. Vorrichtung zur Zuführung der Aufheizenergie oder zur Abführung der Reaktionswärme bei der Polymerisation von Monomeren, insbesondere bei der Suspensionspolymerisation von Vinylchlorid, bestehend aus einem mit Stromstörblechen versehenen zylindrischen Behälter in welchem sich mindestens ein mehrflügeliges Rührwerk befindet und auf dessen Innenwand eine Wärmetauschkonstruktion in Form einer peripheral verlaufenden Halbrohrschlange angeordnet ist, dadurch gekennzeichnet, daß die Halbrohrschlange (4) im zylindrischen Bereich des Behälters (1) von Halbrohr zu Halbrohr abstandsfrei gewickelt ist und die Halbrohr als halbe Kreisrohre vorliegen.

2. Vorrichtung nach Anspruch 1, dadurch gekennzeichnet, daß die Halbrohrschlange (4) aufgeschweißt ist.

## Revendications

1. Appareil pour l'apport de l'énergie de chauffage ou pour l'évacuation de la chaleur de réaction dans la polymérisation de monomères, en particulier dans la polymérisation en suspension de chlorure de vinyle, consistant en un récipient cylindrique muni de baffles, dans lequel se trouve au moins un agitateur à plusieurs pales et sur la paroi intérieure duquel est disposée une construction d'échange de chaleur sous la forme d'un serpentin semi-tubulaire périphérique, caractérisé en ce que le serpentin semi-tubulaire (4) est enroulé dans la partie cylindrique du récipient (1) en enroulement à spires jointives et les demi-tubes sont sous la forme de tubes semi-circulaires.

2. Appareil selon la revendication 1, caractérisé en ce que le serpentin semi-tubulaire (4) est soudé.

## Claims

1. Apparatus for admitting heating energy or abstracting reaction heat during the polymerisation of monomers, especially during the suspension polymerization of vinyl chloride, consisting of a cylindrical container provided with baffle plates, with at least one multiple blade mixer and, at its inside wall, with a heat exchanging structural component in the form of a peripheral semitubular coil characterized in that within the cylindrical portion of the container (1) the semitubular coil (4) is formed of adjoining semitubular windings, the semitubular windings being semicircular tubes.

2. Apparatus as claimed in claim 1, wherein the semitubular coil (4) is welded.

0012410